(19) Europäisches Patentamt

European Patent Office

Office européen des brevets

(11) **EP 0 987 710 A2**

## (12) EUROPEAN PATENT APPLICATION

(43) Date of publication:
**22.03.2000 Bulletin 2000/12**

(21) Application number: **99307351.9**

(22) Date of filing: **16.09.1999**

(51) Int. Cl.[7]: **G11B 27/11**, G11B 23/04,
G11B 23/087, G11B 15/02,
G11B 27/10, G11B 20/12

(84) Designated Contracting States:
**AT BE CH CY DE DK ES FI FR GB GR IE IT LI LU
MC NL PT SE**
Designated Extension States:
**AL LT LV MK RO SI**

(30) Priority: **16.09.1998 JP 26154998**

(71) Applicant: **SONY CORPORATION
Tokyo (JP)**

(72) Inventors:
• **Kato, Tatsuya
Shinagawa-ku, Tokyo (JP)**
• **Ikeda, Katsumi
Shinagawa-ku, Tokyo (JP)**
• **Takayama, Yoshihisa
Shinagawa-ku, Tokyo (JP)**

(74) Representative:
**Nicholls, Michael John
J.A. KEMP & CO.
14, South Square
Gray's Inn
London WC1R 5LX (GB)**

## (54) Tape drive and tape cassette therefor

(57) A tape drive includes a tape-drive unit for recording or reproducing data on or from a magnetic tape when a tape cassette including the magnetic tape is loaded, a memory-drive unit in which when the loaded tape cassette includes a memory for recording management information for managing recording to or reproduction from the magnetic tape, the memory-drive unit reads or writes the management information from or into the memory, and an accumulative-record-information recording unit for recording, in the memory, accumulative record information updated in accordance with the operation of recording or reproduction, by using the time of the first initialization on the tape cassette as a starting point, regardless of subsequent initializations.

FIG. 1

**Description**

The present invention relates to tape drives and recording media therefor.

Recently, streaming tape drives capable of performing recording or reproduction by using a tape cassette including a magnetic tape as a recording medium are known.

When such a tape cassette is used, record information such as use-record information and error information on the magnetic tape is recorded in a predetermined management area formed on, for example, a magnetic tape. Accordingly, accessing the management area makes it possible to know the record information of the tape cassette.

In the case where a tape cassette that was used is formatted (initialized) again for reuse, the record information is erased by formatting.

Accordingly, in a conventional case, it is possible to know only record information from the time of formatting. In other words, in the case where the second formatting is performed in a period from the first formatting after the production of the tape cassette to the present, a problem occurs in that it is impossible to know record information from the time of the production or the first formatting to the present.

Accordingly, it is an object of the present invention to provide a tape drive and a tape cassette therefor that record accumulative record information in accordance with recording or reproducing operations performed after the first initialization.

To this end, according to an aspect of the present invention, the foregoing object is achieved through provision of a tape drive including a tape-drive unit for recording or reproducing data on or from a magnetic tape when a tape cassette including the magnetic tape is loaded, a memory-drive unit in which when the loaded tape cassette includes a memory for recording management information for managing recording to or reproduction from the magnetic tape, the memory-drive unit reads or writes the management information from or into the memory, and an accumulative-record-information recording unit for recording, in the memory, accumulative record information updated in accordance with the operation of recording or reproduction, by using the time of the first initialization on the tape cassette as a starting point, regardless of subsequent initializations.

Preferably, the tape drive further includes a device for detecting the accumulative record information recorded in the memory when the tape cassette is loaded, an accumulative-record-information memory unit for storing the accumulative record information detected by the accumulative-record-information detecting unit, a device in which when recording to or reproduction from the magnetic tape is performed, the accumulative record information stored in the accumulative-record-information memory unit is updated based on the recording or reproducing operation, and an accumulative-record-information writing unit for writing the accumulative record information stored in the accumulative-record-information memory unit into the memory when the tape cassette is unloaded.

The tape drive may further include a device for detecting the accumulative record information recorded in the memory when the tape cassette is loaded, an accumulative-record-information memory unit for storing the accumulative record information detected by the detecting unit, and an accumulative-record-information writing unit for writing, in the memory, the accumulative record information stored in the accumulative-record-information memory unit.

According to another aspect of the present invention, the foregoing object is achieved through provision of a tape cassette including a magnetic tape on which data are recorded, and a memory for storing management information for managing data recording to or data reproduction from the magnetic tape. The management information includes accumulative record information updated in accordance with the recording or reproducing operation by using, as a starting point, the time of the first initialization on the tape cassette, regardless of subsequent initializations.

The accumulative record information may include the number of groups as units of data recorded on the magnetic tape, and the number of groups may represent a total of groups recorded from the time of the first initialization.

The accumulative record information may include the number of times of loading the tape cassette into a tape drive after the first initialization.

According to the present invention, accumulative record information, updated in accordance with the recording or reproducing operation on a magnetic tape, can be stored in a memory-in-cassette (MIC), using the time of the first initialization as a starting point, regardless of subsequent initializations.

Therefore, according to the present invention, when a tape cassette as a recording medium is loaded, by using, e.g., a host computer or the like, accumulative record information can be indicated in which the time of the first initialization of the tape cassette is used as a starting point.

In addition, a user can know accumulative record information, which makes it possible to predict an indication of magnetic tape's quality deterioration based on a frequency of use grasped from the accumulative record information. This enables a user to exchange the magnetic tape before it cannot be used.

Moreover, according to the present invention, since accumulative record information is stored in an MIC of a tape cassette, a tape drive can detect accumulative record information from the MIC whenever the tape cassette is loaded. In other words, the tape cassette can provide the accumulative record information to a tape drive corresponding to the MIC.

The invention will be further described by way of example with reference to the accompanying drawings, in which:-

Fig. 1 is a block diagram of a streaming tape drive according to an embodiment of the present invention;

Fig. 2 is a schematic illustration of the internal structure of a tape cassette;

Fig. 3 is a perspective view showing the exterior of a tape cassette;

Fig. 4 is a schematic drawing showing data structures in a magnetic tape;

Fig. 5 is a schematic illustration of an inside data structure of a partition;

Fig. 6 is a schematic drawing showing the data structure of an MIC;

Fig. 7 is a schematic drawing showing the structure of accumulative partition information;

Fig. 8 is a flowchart illustrating transition of a accumulative-record-information updating process;

Fig. 9 is a flowchart illustrating the details of the updating process shown in Fig. 8; and

Fig. 10 is a flowchart illustrating transition of a process for holding accumulative record information when formatting is performed.

The present invention is described below with reference to embodiments thereof.

An invention concerning a tape cassette including a non-volatile memory and a tape drive (a streaming tape drive and a host computer) constituting a data storage system capable of recording or reproducing digital data from or to the memory-included tape cassette has been filed. In the embodiments of the present invention, the present invention is applied to the data storage system for the memory-included tape cassette. The non-volatile memory included in the tape cassette is hereinafter referred to as the "memory-in-cassette (MIC)".

The present invention is described in the following order:

1. Structure of Tape Cassette;
2. Structures of Streaming tape drive and Host Computer;
3. Structure of Data on Magnetic Tape;
4. Data Structure of MIC; and
5. Examples of Updating and Holding Accumulative Record Information.

1. Structure of Tape Cassette

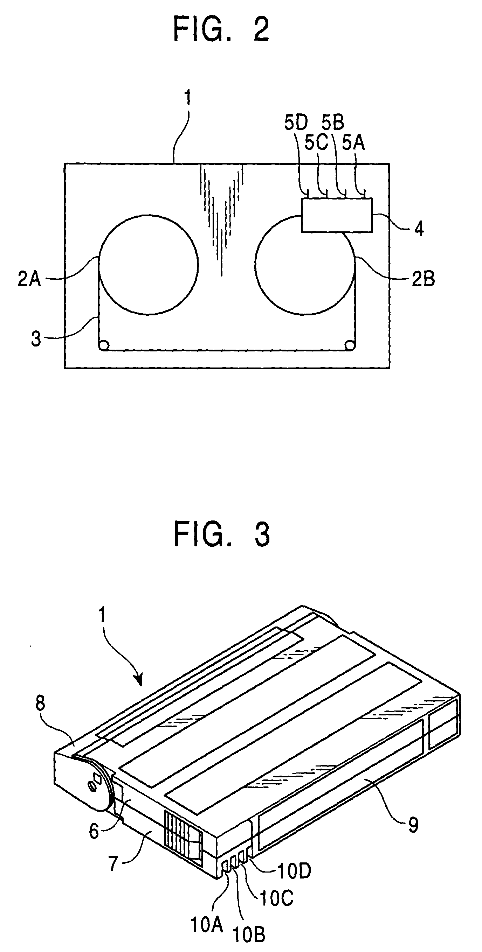

With reference to Figs. 2 and 3, an MIC-included tape cassette for the above-described streaming tape drive is initially described below.

Fig. 2 conceptually shows the internal structure of a tape cassette 1. In the tape cassette 1, reel hubs 2A and 2B are provided, and a magnetic tape 3 having a tape width of 8 mm is wound between both reel hubs 2A and 2B.

The tape cassette 1 is provided with an MIC 4 as a nonvolatile memory, and from the module of the MIC 4, a power-supply terminal 5A, a data-input terminal 5B, a clock input terminal 5C, and a ground terminal 5D, etc., are led. In the MIC 4, a manufacturing data and manufacturing place for each tape cassette, the width and length of a tape, material, information related to a record of using recording data in each partition formed on the tape 3, user information, etc., are stored. In this specification, various types of information to be stored in the MIC 4 are also referred to as "management information".

Fig. 3 shows an example of the exterior of the tape cassette 1, which is basically similar to the structure of a tape cassette for use in an ordinary 8-mm videotape recorder (VTR) in that the entire casing includes an upper case 6a, a lower case 6b, and a guard panel 8. On a label surface 9 in a side surface of the tape cassette 1, terminal pins 7A, 7B, 7C, and 7D are provided, and are connected to the power-supply terminal 5A, the data-input terminal 5B, the clock input terminal 5C, and the ground terminal 5D, respectively. In this embodiment, the tape cassette 1 is brought into contact with a streaming tape drive 10 (described below) via the terminal pins 7A, 7B, 7C, and 7D, whereby data signals or the like are mutually transmitted.

## 2. Structures of Streaming tape drive and Host Computer

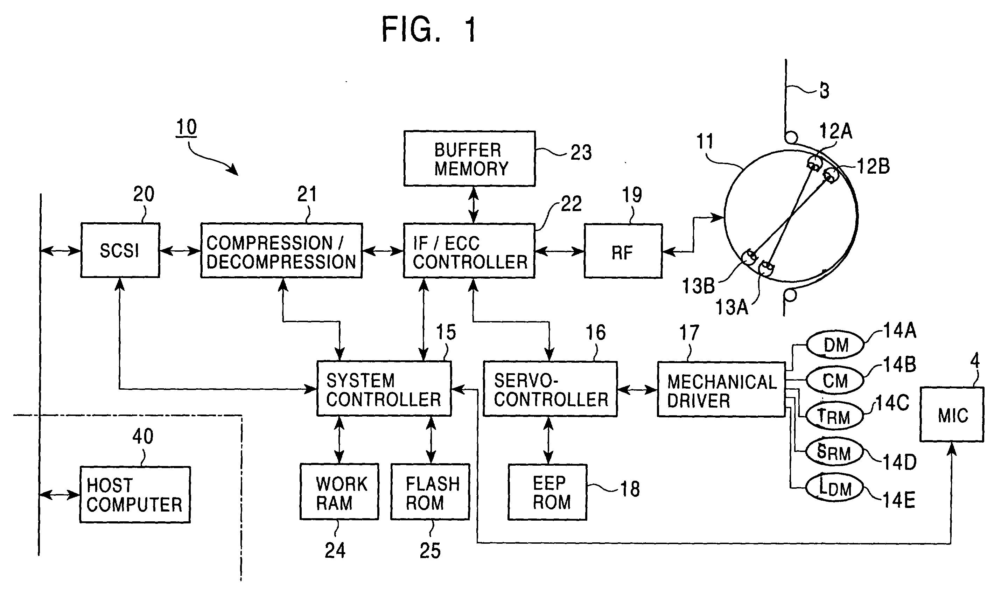

The structure of the streaming tape drive 10 according to this embodiment is described using Fig. 1. The streaming tape drive 10 uses helical scanning to perform recording/reproduction on the magnetic tape 3 in the loaded tape cassette 1.

A rotary drum 11 is provided with, for example, two magnetic heads 12A and 12B and two reproduction heads 13A and 13B.

The magnetic heads 12A and 12B have a structure in which two gaps having different azimuth angles are positioned to be very close to each other. The reproduction heads 13A and 13B have different azimuth angles. In the recording mode, the two recording heads 12A and 12B perform recording on the magnetic tape 3 in units of frames (two tracks), and the reproduction heads 13A and 13B perform data reading from the frames already written by the reproduction heads 12A and 12B. This type of operation is referred to as "read-after-write (RAW)".

The data of the frames read by RAW are decoded by an interface-controller/ECC-formatter 22 (described below) before error detection on them is performed by a system controller 15. In the case where a generated error is detected, the controller 15 controls a recording system so that data rewriting to a frame in which the error was generated is performed.

The rotary drum 11, around which the magnetic tape 3 pulled from the tape cassette 1 is wound, is rotated by a drum motor 14A.

A capstan for running the magnetic tape 3 at a constant speed (not shown), is rotated by a capstan motor 14B.

The reel hubs 2A and 2B in the tape cassette 1 are respectively driven by reel motors 14C and 14D so as to rotate in a normal direction and a reverse direction.

A loading motor 14E drives a loading mechanism (not shown) and executes the loading/unloading of the magnetic tape 3 on the rotary drum 11.

The drum motor 14A, the capstan motor 14B, the reel motor 14C and 14D, and the loading motor 14E are supplied with power from a mechanical driver 17, whereby they are driven for rotation. The mechanical driver 17 drives each motor in accordance with control from servo-controller 16. The servo-controller 16 controls the rotational speed of each motor so as to execute tape running in normal recording and reproducing modes, tape running in a high speed reproducing mode, tape running in fast-forward and rewinding modes, the operation of tape cassette loading, the operation of loading/unloading, the operation of tape tension control, etc.

The drum motor 14A, the capstan motor 14B, and the reel motor 14C and 14D are respectively provided with frequency generators (FGs) (not shown), whereby information of the rotation of each motor can be detected.

The servo-controller 16 detects an error between the rotation of each motor and a target speed by determining, based on their FG pulses, the rotational speed of each motor, and performs power supply control for the mechanical driver 17, which corresponds to the amount of the error, whereby rotational speed control by a closed loop is realized. Accordingly, in various operational modes such as normal running in the recording or reproducing mode, a high speed search, a fast-forward, and rewinding, the servo-controller 16 can control each motor to rotate at a target rotational speed in accordance with each mode.

In an electrically erasable programmable read-only memory (EEPROM) 18, constants, etc., used for servo control of each motor by the servo-controller 16, are stored.

The servo-controller 16 is bidirectionally connected to a system controller 15 that uses an interface-controller/ECC-formatter (hereinafter referred to as an "IF/ECC controller") 22.

In the streaming tape drive 10, an SCSI interface 20 is used for inputting and outputting data. For example, when data are recorded, sequential data are input and supplied in transmission-data units called "fixed length records" from a host computer 20 to a compression/decompression circuit 21 via the SCSI interface 20. In this type of streaming tape drive system, there is a mode in which data are transmitted in units as groups of variable-length data from the host computer 40.

The compression/decompression circuit 21 uses a predetermined method to perform compression on the input data, as required. In the case where as an example of compression, compression using LZ codes is employed, a dedicated code is assigned to a character string processed in the past, and the codes are stored in the form of a dictionary. A subsequently input character string and the contents of the dictionary are compared, and when the character string as input data coincides with a code of the dictionary, the character string data replace the code of the dictionary. Data of an input character string that does not coincide with a code of the dictionary are sequentially supplied with a new code, and the data are registered in the dictionary. By registering data of input character strings, as described above, and replacing the character string data by codes of a dictionary, data compression is performed.

The output of the compression/decompression circuit 21 is supplied to the IF/ECC controller 22, and the IF/ECC controller 22 uses the operation of control to temporarily store the output of the compression/decompression circuit 21 in a buffer memory 23. The data stored in the buffer memory 23 are finally treated as fixed-length units each called "group" corresponding to 40 tracks of a magnetic tape, and ECC formatting on the data is performed.

The ECC formatting is that error-correcting codes are added to recording data and that data are modulated so as to be adapted for magnetic recording before being supplied to an RF processor 19.

The RF processor 19 generates a recording signal by performing processes on the supplied recording data, such as amplification and recording equalizing, and supplies it to the recording heads 12A and 12B. This performs data recording from the reproduction heads 12A and 12B to the magnetic tape 3.

Briefly referring to the operation of data reproduction, the recording data on the magnetic tape 3 are read as an RF reproduction signal by the reproduction heads 13A and 13B, and the RF processor 19 processes the reproduction output by performing reproduction equalizing, reproduction clock generation, binarizing, decoding (e.g., Viterbi decoding), etc.

The signal read as described above is supplied to the IF/ECC controller 22, and error-correction processing or the like is initially performed. In addition, the signal is temporarily stored in the buffer memory 23, and is read at a predetermined time and supplied to the compression/decompression circuit 21.

Based on determination of the system controller 15, the compression/decompression circuit 21 performs data decompression if the supplied data are data compressed by the compression/decompression circuit 21 in the recording mode, while it performs no data decompression and allows the data to pass through it if the supplied data are non-compressed data.

The output data of the compression/decompression circuit 21 is output as reproduction data to the host computer 40 via the SCSI interface 20.

In Fig. 1, the MIC 4 is also shown, together with the magnetic tape 3 in the tape cassette 1. When the tape cassette 1 is loaded into the streaming tape drive, the MIC 4 is connected to the system controller 15 by the terminal pins shown in Fig. 3 so that data can be input and output. Thereby, the system controller 15 can read the management information recorded in the MIC 4, and can update the management information.

Between the MIC 4 and the external host computer 40, information is mutually transmitted using SCSI commands. Accordingly, it is not necessary to particularly provide a dedicated line between the MIC 4 and the host computer 40, and as a result, data exchange between the tape cassette 1 and the host computer 40 can be performed using only the SCSI interface 20.

Between the streaming tape drive 10 and the host computer 40, the SCSI interface 20 is used to perform mutual transmission of information, as described above, and the host computer 40 uses SCSI commands to perform various types of communication with the system controller 15.

Therefore, the host computer 40 instructs the system controller 15 with the SCSI commands to execute data writing or reading on the MIC 4.

In a work RAM 24 and a flash ROM 25, data to be used for various processes by the system controller 15 are stored.

In the flash ROM 25, for example, constants, etc., for control, are stored. Also, the work RAM 24 is used as a work area for various processes, and is used as a memory for storing and computing the data read from the MIC 4, data to be written to the MIC 4, mode data set in units of tape cassettes, various flag data, etc.

When the tape cassette 1 is loaded, accumulative partition information read from the MIC 4 is stored in the work RAM 24. The work RAM 24 is used as a work area in the case where the accumulative partition information is updated in accordance with the operation of recording or reproduction, or is used as an area for holding the accumulative partition information in the case where the tape cassette 1 is formatted.

In the work RAM 24, current information on processing from, for example, the last time of loading the tape cassette into the streaming tape drive 10 up to the present, is stored.

The work RAM 24 stores, for example, the number of groups called "Current Number of Groups Written", the number of frames in which data rewriting was requested based on RAW, which is called "Current RAW Retries", the number of groups of partitions read from the magnetic tape, which is called "Current Number of Groups Read", information on the number of times of error correction performed using C3 parity, which is called "Current C3 ECC Retries", etc. In the streaming tape drive 10, the information is updated whenever the operation of recording or reproduction is performed. Current information generated up to the unloading of the tape cassette 1 is used to update previous information, and is subsequently set to "0" in accordance with unloading (resetting).

Loading means that the tape cassette 1 is loaded into the streaming tape drive 10, while unloading (described below) means that the tape cassette 1 is discharged from the streaming tape drive 10.

The work RAM 24 and the flash ROM 25 may be formed as an internal memory in a microcomputer constituting the system controller 15, and part of the buffer memory 23 may be used as a work memory.

3. Structure of Data on Magnetic Tape

A data format applied to a data storage system including the above-described streaming tape drive 10 and tape cassette 1 is briefly described below.

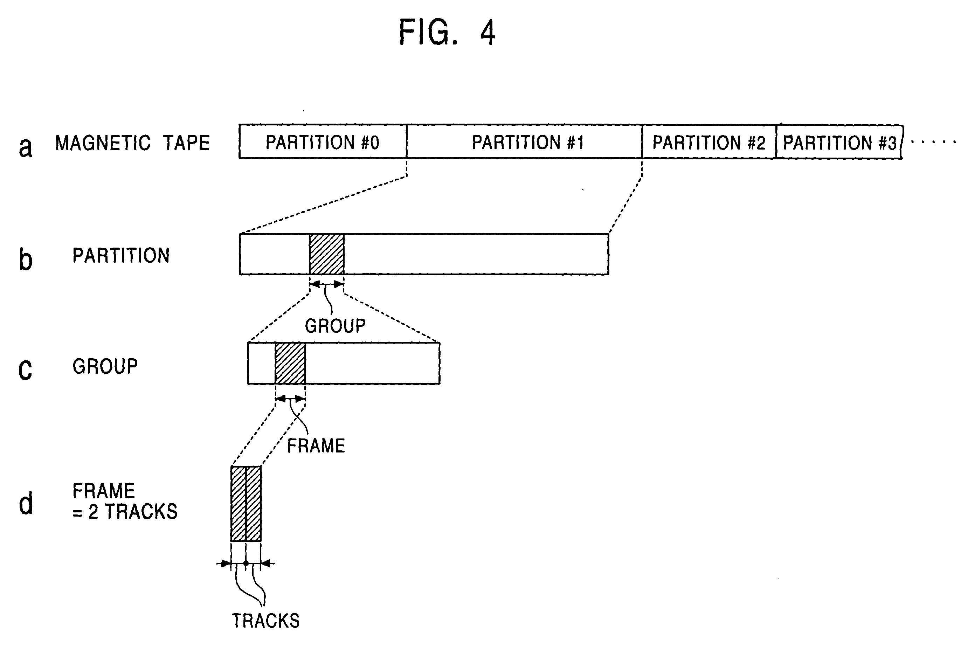

Fig. 4 schematically shows the structure of data recorded on the magnetic tape 3.

In Fig. 4(a), one magnetic tape 3 is shown. In the case where a plurality of partitions are formed, one magnetic tape 3 can be used with it divided in units of partitions, as shown in Fig. 4(b). In the case of the present system, a maximum of 256 partitions can be set and managed. The partitions shown in Fig. 4 are provided with partition numbers for management as they are indicated by partitions #0, #1, #2, #3, and so forth.

Accordingly, in these structures, data recording/reproduction, etc., can be separately performed for each partition. For example, a data recording unit in one partition shown in Fig. 4(b) can be divided into fixed length units each called a "group", and the group units are used to perform recording on the magnetic tape 3.

In this case, one group corresponds to the amount of 20 frames of data, and one frame is composed of two tracks, as shown in Fig. 4(d). Two tracks forming one frame are composed of a positive azimuth track and a negative azimuth track which are adjacent to each other. Therefore, one group consists of 40 tracks.

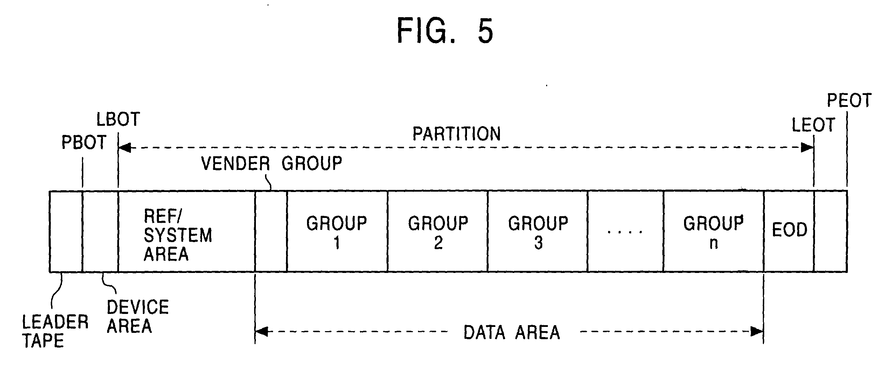

One partition shown in (a) and (b) of Fig. 4 is formed using the data structure shown in Fig. 5. Fig. 5 illustrates a case on the assumption that one partition is formed for the overall tape length.

In the structures shown in Fig. 5, a leader tape is physically positioned at the head of the first part of the magnetic tape 3, and a device area to be used as an area for performing the loading or unloading of the tape cassette 1 is subsequently provided. The head of the device area is used as a tape's physical head position called "Physical Beginning Of Tape (PBOT)".

Following the device area, a reference area, and a system area (hereinafter referred to as a "system area" including the reference area) in which record-of-use information, etc., is stored, are provided. A data area is provided following them. The head of the system area is used as a tape's logical beginning position called "Logical Beginning Of Tape (LBOT)".

In the data area, a vendor group representing information on a vendor that firstly creates and supplies data is provided, and a plurality of groups, each of which is actually shown in Fig. 4(c), are sequentially formed as indicated by "groups 1 to n". In the end group n, the End of Data (EOD) area representing the end of the data area in the partition is provided. The end of the EOD is used as a tape's logical-end position called "Logical End Of Tape (LEOT)". The Physical End of Tape (PEOT) represents the physical end position of the tape or the physical end position of the partition.

4. Data Structure of MIC

The data structure of the MIC 4 provided in the tape cassette 1 is described below.

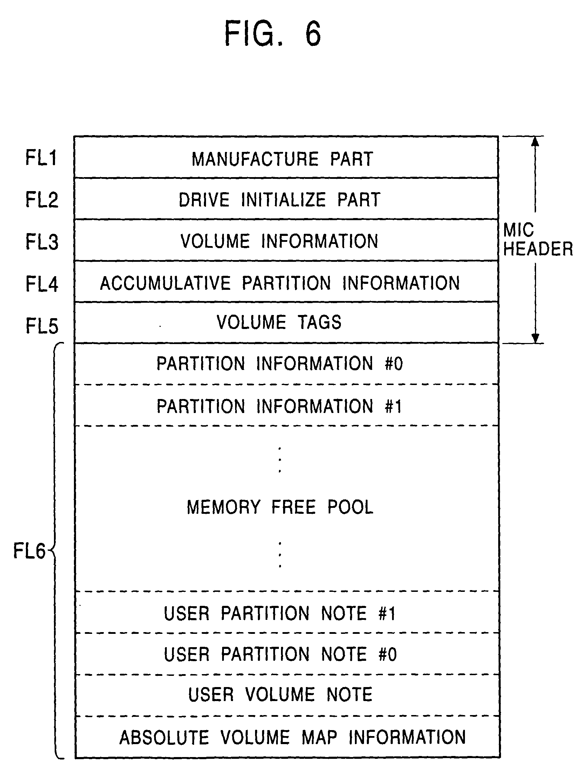

Fig. 6 is a schematic drawing showing an example of the data structure in the MIC 4. The capacity of the MIC 4 is set at, for example, 2 kilobytes, and fields FL1 to FL6 are provided in this 2-kilobyte area.

In these fields FL1 to FL6, various types of information obtained at the time of tape cassette production, tape information obtained at the time of initialization, and information on each partition, etc., are written.

Field FL1 is used as a manufacture part to mainly store the various types of information at the time of tape cassette production.

Field FL2 is used as a drive initialize part to store mainly store the information at initialization, etc.

Field FL3 is used as volume information to store basic management information on the entirety of the tape cassette 1.

Field FL4 stores information as accumulative partition information, and Field FL5 stores information as volume tags.

Fields FL1 to FL5 store checksum information for data forming each field.

Field FL6 is used as a memory free pool to store various types of information in accordance with the process of recording and reproduction operations. Initially, in accordance with partitions formed on the magnetic tape 3, partition information units #0, #1, ..., which are used as management information corresponding to the partitions, are sequentially written from the beginning of the memory free pool.

From the end of the memory free pool, absolute volume map information as map information for high-speed search is written, and a user volume note and user partition notes are subsequently written. The user volume note is information such as user-input comments concerning the tape cassette entirety, and the user partition notes are information such as user-input comments concerning the partitions. Accordingly, these types of information are stored when the user instructs writing, and they are not always described.

An intermediate area in which these types of information are not stored is left as a memory free pool for subsequent writing.

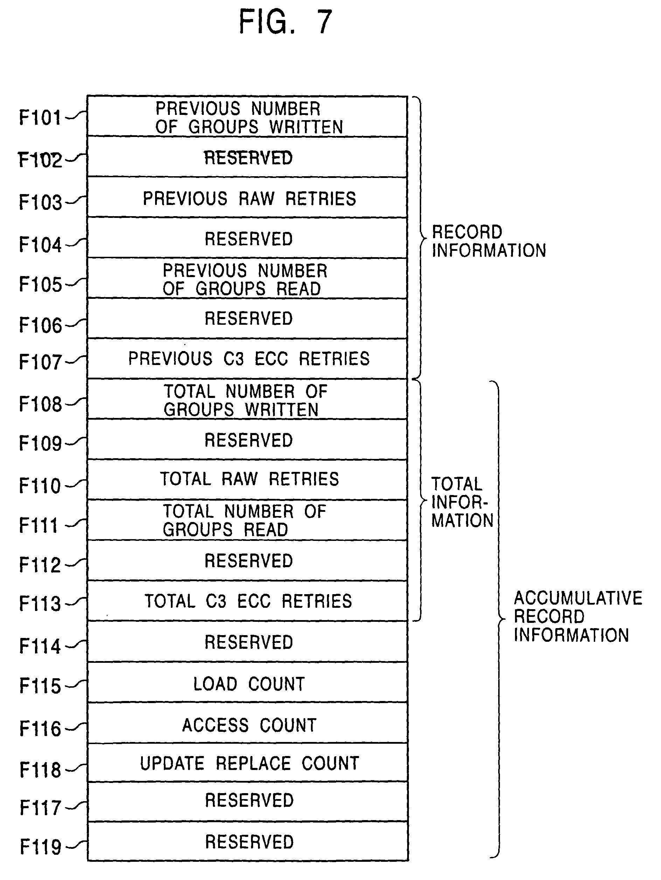

An example of the accumulative partition information as Field 4 is described in accordance with Fig. 7.

Fields F101 to F107 represent record information (previous information) on various processes performed from the previous loading to the unloading of the tape cassette 1.

Field F101 is called "Previous Number of Groups Written", and indicates information on the number of groups in each partition recorded on the magnetic tape 3.

After the reserved area in Field F102, Field F103 is called "Previous RAW Retries", and indicates information on the number of times of RAW.

After the reserved area in Field F104, Field F105 is called "Previous Number of Groups Read", and indicates information on the number of groups of the partition read from the magnetic tape 3.

After the reserved area in Field F106, Field F107 is called "Previous C3 ECC Retries", and indicates information on the number of corrections using C3 parity.

The previous information is updated by, for example, current information stored in the work RAM 24.

Fields F108 to F119 represent information on an accumulative record of various processes performed for the tape cassette 1 in a period from the first formatting to the present. They represent, for example, an accumulative value of the current information, etc.

In other words, the accumulative record information represented by these fields can be maintained, even when the tape cassette 1 is formatted.

Field F108 is called "Total Number of Groups Written", and represents a total of groups recorded on the magnetic tape 3. In other words, this value includes a counted number of the rewritten groups.

After the reserved area in Field F109, Field F110 is called "Total RAW Retries", and represents the number of times of RAW.

Field F111 is called "Total Number of Groups Read", and represents a total of groups read from the magnetic tape 3. In other words, this value is increased in also the case where the same group is read a number of times.

After the reserved area in Field F112, Field F113 is called "Total C3 ECC Retries", and represents the number of error corrections using the C3 parity.

The values of these Fields F108, F110, F111, and F113 correspond to accumulative values of the current information. In other words, they are updated using the current information when, for example, the tape cassette 1 is unloaded. Each type of information which has "Total" in the beginning of the name is hereinafter referred to as "total information" for convenience of description.

After the reserved area in Field F114, Field F115 is called "Load Count", and represents the number of times of loading the tape cassette into the streaming tape drive 10.

Field F116 is called "Access Count", and represents the number of times of accessing the partition and the number of times of writing data in the partition.

Field F117 is called "Update Replace Count", and represents the number of times of rewriting data in the partition.

The information in Fields F115 to F117 is updated as required in accordance with the recording or reproducing operation of the streaming tape drive 10.

Fields F118 and F119 are used as reserved areas.

The above-described data structure in the MIC 4 is only an example, and the data arrangement, area setting, etc., are not limited thereto.

5. Examples of Updating and Holding Accumulative Record Information

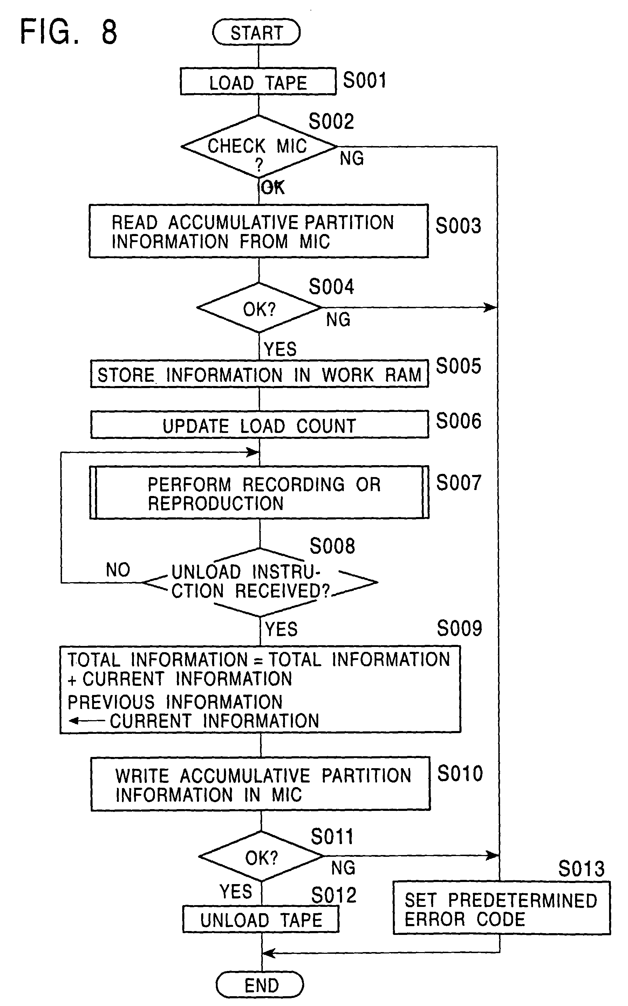

Fig. 8 is a flowchart illustrating the progress of a process for updating, the system controller 15, the accumulative record information from the time that the tape cassette 1 was loaded into the streaming tape drive 10 to the time of unloading.

The loading (S001) of the tape cassette 1 into the drive 10 causes the checking (S002) of the MIC 4. If the checking result is affirmative ("OK"), in other words, if it is determined that the tape cassette 1 is provided with the MIC 4, the reading of the accumulative record information from the MIC 4 is initiated (S003). At this time, it is determined whether the reading has been normally performed (S004). If the determination result is normal ("OK"), the accumulative record information is stored in the work RAM 24 (S005). As described above, in the period from step S001 to step S005, the magnetic tape 3 is wound around the rotary drum 11.

A loading count is updated in accordance with the loading of the tape cassette 1 (S006). After that, actual data recording or reproduction is performed. Part of the current information and accumulative record information is updated in accordance with the reproducing or recording operation (S007).

The updating is performed until an unloading instruction from the host computer 40 is detected (S008).

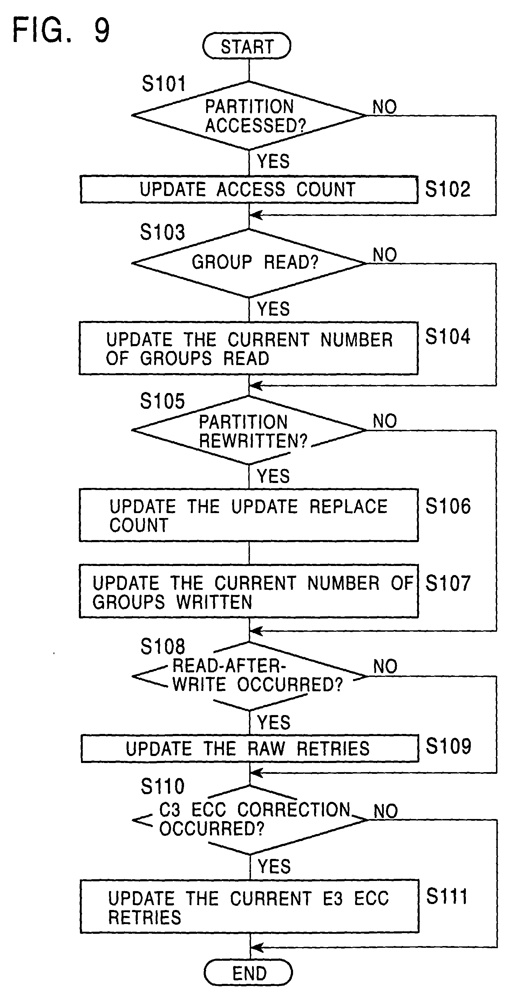

An example of the updating (step S007) shown in Fig. 8 is described in accordance with the flowchart shown in Fig. 9.

When an arbitrary partition formed on the magnetic tape 3 is accessed (S101), an access count is updated (S102).

If the partition has been read (S103), the number of groups read, namely, the Current Number of Groups Read is updated (S104).

If the partition has been rewritten (S105), the Update Replace Count is updated (S106). In addition, the number of groups written in accordance with the rewriting of the partition, namely, the Current Number of Groups Written is updated (S107).

If RAW has been performed (S108), the Current RAW Retries is updated (S109).

If the error correction using the C3 parity has been performed (S110), the Current C3 ECC Retries is updated (S111).

Step S101 to step S111 do not correspond to the progress of the actual process, and are performed as required, based on the operation of the streaming tape drive 10 until the unloading instruction is supplied.

When the updating process shown in Fig. 9 is terminated based on the unloading instruction, the process proceeds to step S009, and by using "the total information = the total information + the current information ", the total information is updated using the current information. At this time, the previous information is updated using the current information. This updates the accumulative partition information.

The writing of the updated accumulative partition information into the MIC 4 is performed (S010). It is determined (S011) whether the writing has been normally performed. If the determination result is normal ("OK"), the unloading of the tape cassette 1 is executed (S012).

If it is determined that the result(S002) of checking the MIC 4, the result (S004) of the reading, or the result (S010) of the writing is, for example, negative ("NG"), the setting of a predetermined error code corresponding to each processing result is performed (S013).

Concerning the total information, the case where updating using the current information (shown in Fig. 9) is performed at the time of unloading has been described, but updating may be performed by implementing necessary addition in accordance with the recording or reproducing operation, as in the case of the updating of current information.

As described above, the accumulative record information is updated and stored in the MIC 4 in accordance with loading or unloading, and is maintained even when formatting is performed.

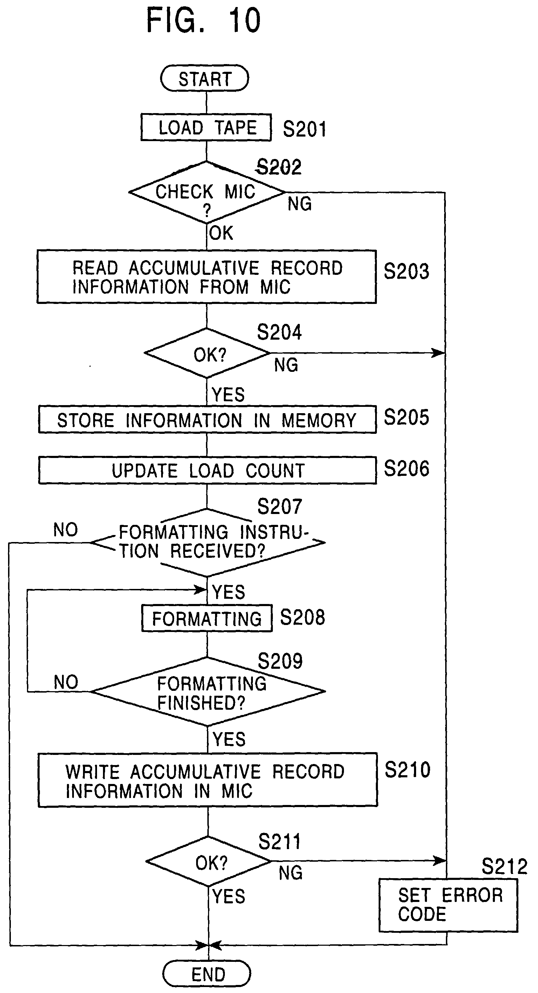

Fig. 10 is a flowchart illustrating a process in which the system controller 15 maintains the accumulative record information at the time of formatting.

In the flowchart shown in this figure, step S201 to step S206 correspond to step S001 to step S006 shown in Fig. 8.

In other words, the loading (S201) of the tape cassette 1 causes the checking (S202) of the MIC 4. If it is determined that the checking result is affirmative ("OK"), i.e., the tape cassette 1 is provided with the MIC 4, the reading of the accumulative partition information is initiated (S203). After that, it is determined (S204) whether the reading has been normally performed. If the determination result is normal ("OK"), the accumulative partition information is stored in the work RAM 24 (S205). The loading count is updated in accordance with the loading of the tape cassette 1 (S006).

At this time, when a tape cassette format is instructed by a format command from the host computer (S207), predetermined formatting is initiated. When it is determined (S209) that the formatting has been finished, the accumulative record information of the accumulative partition information is written in the MIC 4. That is, the accumulative record information can be maintained for the MIC 4. in which initialization is performed by formatting.

Concerning subsequent steps (not shown), the tape cassette 1 may be unloaded when the formatting is completed, or data recording may be performed.

In the case where data recording is performed after the formatting, the accumulative record information, which is updated in the work RAM 24 in accordance with the recording operation, may be written in the MIC 4 when the tape cassette 1 is unloaded, as described with reference to Fig. 8.

By continuously maintaining the accumulative record information, even when the MIC 4 is formatted, the accumulative record information can be compared with the current information and the previous information, whereby an indication that the quality of the magnetic tape 3 will deteriorate can be predicted based on the frequency of using the tape cassette 1.

**Claims**

1. A tape drive comprising:

   tape-drive means for recording or reproducing data on or from a magnetic tape when a tape cassette including said magnetic tape is loaded;

   memory-drive means in which when the loaded tape cassette includes a memory for recording management information for managing recording to or reproduction from said magnetic tape, said memory-drive means reads or writes the management information from or into said memory; and

   accumulative-record-information recording means for recording, in said memory, accumulative record information updated in accordance with the operation of recording or reproduction, by using the time of the first initialization on said tape cassette as a starting point, regardless of subsequent initializations.

2. A tape drive according to Claim 1, further comprising:

means for detecting the accumulative record information recorded in said memory when the tape cassette is loaded;
accumulative-record-information memory means for storing the accumulative record information detected by said accumulative-record-information detecting means;
means in which when recording to or reproduction from said magnetic tape is performed, the accumulative record information stored in said accumulative-record-information memory means is updated based on the recording or reproducing operation; and
accumulative-record-information writing means for writing the accumulative record information stored in the accumulative-record-information memory means into said memory when the tape cassette is unloaded.

3. A tape drive according to Claim 1, further comprising:

means for detecting the accumulative record information recorded in said memory when the tape cassette is loaded;
accumulative-record-information memory means for storing the accumulative record information detected by the detecting means; and
accumulative-record-information writing means for writing, in said memory, the accumulative record information stored in said accumulative-record-information memory means after the initialization on said tape cassette.

4. A tape cassette including a magnetic tape on which data are recorded and a memory for storing management information for managing data recording to or data reproduction from said magnetic tape, wherein the management information includes accumulative record information updated in accordance with the recording or reproducing operation by using, as a starting point, the time of the first initialization on said tape cassette, regardless of subsequent initializations.

5. A tape cassette according to Claim 4, where in the accumulative record information includes the number of groups as units of data recorded on said magnetic tape, and the number of groups represents a total of groups recorded from the time of the first initialization.

6. A tape cassette according to Claim 4 or 5, wherein the accumulative record information includes the number of times of loading said tape cassette into a tape drive after the first initialization.

# FIG. 1

EP 0 987 710 A2

EP 0 987 710 A2

# FIG. 2

# FIG. 3

11

# FIG. 4

a MAGNETIC TAPE | PARTITION #0 | PARTITION #1 | PARTITION #2 | PARTITION #3 | · · · · ·

b PARTITION

GROUP

c GROUP

FRAME

d FRAME = 2 TRACKS

TRACKS

# FIG. 5

# FIG. 6

| | |
|---|---|
| FL1 | MANUFACTURE PART |
| FL2 | DRIVE INITIALIZE PART |
| FL3 | VOLUME INFORMATION |
| FL4 | ACCUMULATIVE PARTITION INFORMATION |
| FL5 | VOLUME TAGS |

MIC HEADER

FL6

PARTITION INFORMATION #0

PARTITION INFORMATION #1

.
.

MEMORY FREE POOL

.
.

USER PARTITION NOTE #1

USER PARTITION NOTE #0

USER VOLUME NOTE

ABSOLUTE VOLUME MAP INFORMATION

# FIG. 7

| | |
|---|---|
| F101 | PREVIOUS NUMBER OF GROUPS WRITTEN |
| F102 | RESERVED |
| F103 | PREVIOUS RAW RETRIES |
| F104 | RESERVED |
| F105 | PREVIOUS NUMBER OF GROUPS READ |
| F106 | RESERVED |
| F107 | PREVIOUS C3 ECC RETRIES |
| F108 | TOTAL NUMBER OF GROUPS WRITTEN |
| F109 | RESERVED |
| F110 | TOTAL RAW RETRIES |
| F111 | TOTAL NUMBER OF GROUPS READ |
| F112 | RESERVED |
| F113 | TOTAL C3 ECC RETRIES |
| F114 | RESERVED |
| F115 | LOAD COUNT |
| F116 | ACCESS COUNT |
| F118 | UPDATE REPLACE COUNT |
| F117 | RESERVED |
| F119 | RESERVED |

RECORD INFORMATION (F101–F107)

TOTAL INFORMATION (F108–F113)

ACCUMULATIVE RECORD INFORMATION

FIG. 8

```
                    ( START )
                        │
              ┌─────────────────────┐
              │     LOAD TAPE       │ S001
              └─────────────────────┘
                        │
                        │         S002
                   ╱─────────╲
                  ╱ CHECK MIC  ╲───────────────┐  NG
                  ╲     ?      ╱                │
                   ╲─────────╱                 │
                      │OK                      │
         ┌──────────────────────────────┐      │
         │ READ ACCUMULATIVE PARTITION  │ S003 │
         │   INFORMATION FROM MIC       │      │
         └──────────────────────────────┘      │
                      │                         │
                      │        S004             │
                 ╱─────────╲                    │
                ╱   OK?      ╲───────────────────┼──────►
                ╲           ╱  NG                │
                 ╲─────────╱                     │
                    │ YES                        │
         ┌──────────────────────────────┐        │
         │ STORE INFORMATION IN WORK RAM │ S005  │
         └──────────────────────────────┘        │
                    │                            │
         ┌──────────────────────────────┐        │
         │     UPDATE LOAD COUNT        │ S006   │
         └──────────────────────────────┘        │
                    │                            │
         ┌──────────────────────────────┐        │
         │  PERFORM RECORDING OR        │ S007   │
         │      REPRODUCTION            │        │
         └──────────────────────────────┘        │
                    │                            │
                    │         S008               │
              ╱───────────────╲                  │
        NO   ╱ UNLOAD INSTRU-   ╲                │
      ┌──────╲ CTION RECEIVED?  ╱                │
      │       ╲───────────────╱                  │
      │              │ YES           S009        │
      │  ┌──────────────────────────────────┐    │
      │  │ TOTAL INFORMATION = TOTAL        │    │
      │  │ INFORMATION + CURRENT INFORMATION│    │
      │  │ PREVIOUS INFORMATION             │    │
      │  │  ◄── CURRENT INFORMATION         │    │
      │  └──────────────────────────────────┘    │
      │              │                           │
      │  ┌──────────────────────────────┐        │
      │  │ WRITE ACCUMULATIVE PARTITION │ S010   │
      │  │   INFORMATION IN MIC         │        │
      │  └──────────────────────────────┘        │
      │              │                           │
      │              │         S011              │
      │         ╱─────────╲                      │
      │        ╱   OK?      ╲─────────────────────┤
      │        ╲           ╱  NG                  │
      │         ╲─────────╱                       │
      │           │ YES      S012        S013     │
      │  ┌──────────────────┐  ┌──────────────────────┐
      │  │   UNLOAD TAPE    │  │ SET PREDETERMINED    │
      │  └──────────────────┘  │ ERROR CODE           │
      │           │            └──────────────────────┘
      │           │                     │
      └───────────┼─────────────────────┘
                  │
              ( END )
```

# FIG. 9

START

S101
PARTITION ACCESSED? — NO

YES

UPDATE ACCESS COUNT | S102

S103
GROUP READ? — NO

YES

UPDATE THE CURRENT NUMBER OF GROUPS READ | S104

S105
PARTITION REWRITTEN? — NO

YES

UPDATE THE UPDATE REPLACE COUNT | S106

UPDATE THE CURRENT NUMBER OF GROUPS WRITTEN | S107

S108
READ-AFTER-WRITE OCCURRED? — NO

YES

UPDATE THE RAW RETRIES | S109

S110
C3 ECC CORRECTION OCCURRED? — NO

YES

UPDATE THE CURRENT E3 ECC RETRIES | S111

END

# FIG. 10

START

LOAD TAPE — S201

S202
CHECK MIC ? — NG

OK

READ ACCUMULATIVE RECORD INFORMATION FROM MIC — S203

S204
OK? — NG

YES

STORE INFORMATION IN MEMORY — S205

UPDATE LOAD COUNT — S206

S207
FORMATTING INSTRU-TION RECEIVED? — NO

YES

FORMATTING — S208

S209
FORMATTING FINISHED? — NO

YES

WRITE ACCUMULATIVE RECORD INFORMATION IN MIC — S210

S211
OK? — NG

S212
SET ERROR CODE

YES

END